# EUROPEAN PATENT APPLICATION

(11) **EP 1 555 843 A1**
(43) Date of publication of application: **20.07.2005**
(21) Application number: 03758876.1
(22) Date of filing: 24.10.2003
(51) Int. Cl.: H04Q 7/38, H04L 12/56

(54) **RADIO COMMUNICATION MANAGEMENT METHOD AND RADIO COMMUNICATION MANAGEMENT SERVER**

(30) Priority: 25.10.2002 JP 2002311910
(71) Applicant: MATSUSHITA ELECTRIC INDUSTRIAL CO., LTD., Kadoma-shi, Osaka 571-8501 (JP); Tanaka, Takeshi, Yokosuka-shi, Kanagawa 239-0847 (JP)
(72) Inventor: TANAKA, Takeshi, Yokosuka-shi, Kanagawa 239-0847 (JP); AOYAMA, Takahisa, Yokohama-shi, Kanagawa 233-0007 (JP)
(74) Representative: Casalonga, Axel
(86) International application number: PCT/JP2003/013624
(87) International publication number: WO 2004/039116

(57) **Abstract**

An object is to smoothly perform handover at the time when a mobile terminal changes link connection, and shorten a time required for changing the link connection. When a mobile terminal 21 changes a connection link utilizing HMIPv6, the terminal transmits authentication information together with information (binding update) for changing the link connection with respect to a server (MAP 10) which manages the link connection of the mobile terminal. The MAP transmits an authentication result together with confirmation information (binding acknowledgment) of the change of the link connection, when making an authentication result with respect to an authentication server 32 to acquire the authentication result. After receiving binding update and authentication information from the mobile terminal, the MAP first sends binding acknowledgment and tentative connection permission, thereafter acquires the authentication result, and may determine whether or not to grant an official connection permission.

## Description

### Technical Field

The present invention relates to a radio communication management system and a radio communication management server which change an address of a mobile terminal in such a manner that communication is not interrupted in a case where the mobile terminal changes link connection, particularly to a radio communication management method and a radio communication management server in a radio communication management system which manages link connection of a mobile terminal using hierarchical mobile IP version 6 (HMIPv6).

### Background Art

In a case where a user communicates with a network using a mobile terminal, an operator which provides an access needs to judge (authenticate) whether or not the mobile terminal has rights to connect itself to the network before providing a connection service between the mobile terminal and the network. This authentication process is realized by an intermediate node which is a facility of the operator providing the access and which inquires of an authentication server about authentication information (combination of terminal ID and user information) included in a connection request from the mobile terminal before providing the connection service to the network with respect to the mobile terminal. In accordance with an authentication result included in a response from the authentication server, it is judged whether or not the connection service to the network is supplied to the mobile terminal. It is to be noted that, if necessary, it is also possible to ask a predetermined authentication server existing in the user operator's facility for the authentication via the network. In the present description, this sequence will be referred to as an authentication sequence.

For example, in a case where IEEE802.11x which is a technique described in Non-Patent Document 1 described later is applied to a wireless LAN, the mobile terminal sends the authentication information to an access point, when connecting itself to the access point which is an entrance during the connection to the network, the access point makes an authentication request with respect to the authentication server of the mobile terminal, and accordingly an authentication process can be realized.

Additionally, in recent years, the mobile terminal has been set to be wireless. Accordingly, there is an increasing case where the mobile terminal continuously switches the intermediate node used by the terminal while moving, and performs continuous communication with the network. In this case, any node in the network needs to have a function of specifying a position of the mobile terminal in a certain method in order to forward a packet to the mobile terminal. The node having the function of specifying the position of the mobile terminal is referred to as a position management server, and is usually installed in an operator of a user to whom the mobile terminal belongs (i.e., the mobile terminal is a subscriber of an operator or a user).

Seamless handover indicating that the mobile terminal continues the communication with the network while switching the intermediate node for use can be usually realized, when the mobile terminal registers the position with respect to the position management server disposed in the network. It is to be noted that in the present description, this sequence will be referred to as a position registration sequence.

It is to be noted that the authentication sequence is different from the position registration sequence in a node relating to the sequence. That is, the mobile terminal communicates with a server in a domain providing an access to the network in the authentication sequence, whereas the mobile terminal communicates with the position management server in the network in the position registration sequence.

The mobile terminal cannot communicate with the network until the authentication sequence or the position registration sequence is completed, and therefore these sequences are preferably as short as possible. Therefore, as described in Non-Patent Document 2 described later, a diameter mobile IPv4 application is considered in which the authentication sequence is combined with the position registration sequence. As to this diameter mobile IPv4 application, the above-described sequence is included in a mobile IPv4 sequence described in Non-Patent Document 3 which is a technique for making possible the seamless handover described later under an IPv4 environment.

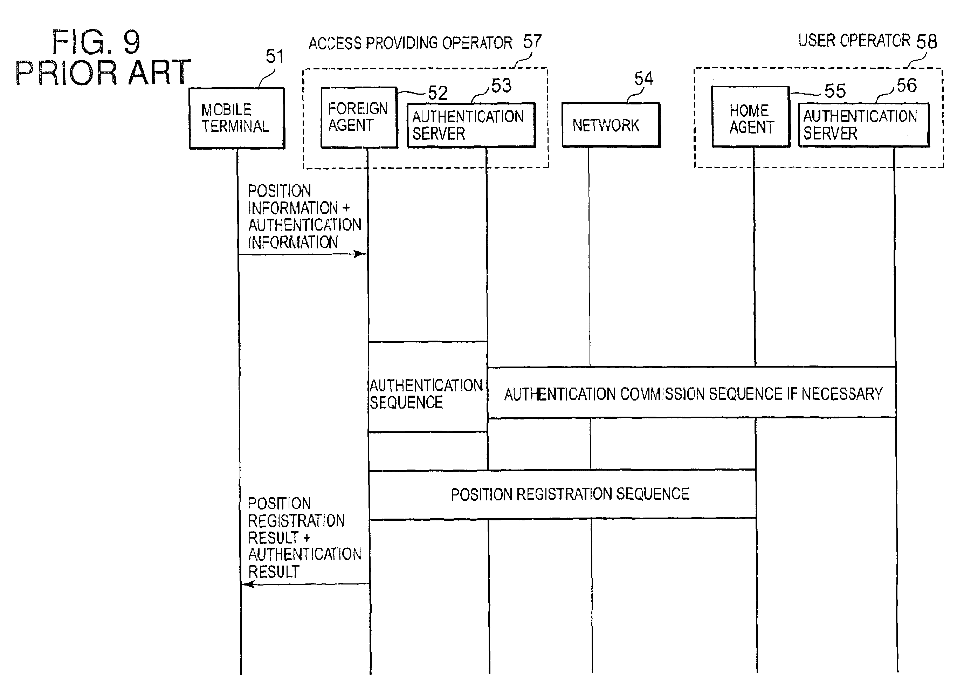

FIG. 9 is a diagram showing a sequence of the diameter mobile IPv4 application according to a conventional technique. FIG. 9 shows: a mobile terminal 51 for use when a user connects itself to a network 54 to perform communication; a foreign agent 52 and an authentication server 53 in an operator 57 which provides an access to the network 54 with respect to the mobile terminal 51; the network 54; and a home agent 55 and an authentication server 56 arranged in an operator 58 of a user who manages an address of a user's terminal, existing on the network 54.

The mobile terminal on which a mobile IPv4 function is mounted performs the position registration sequence with respect to a position management server (home agent 55) via the intermediate node (foreign agent 52) disposed in the operator 57 (foreign network) which provides the access. In the diameter mobile IPv4 application, when a mobile node registers the position, the authentication information of the mobile terminal 51 is added into a position registration message (binding update) to be transmitted to the foreign agent 52. The foreign agent 52 makes an authentication result with respect to the authentication server 53 in the authentication server 53 in the operator 57 which provides the access or the authentication server 56 in the user's operator 58, and the authentication sequence is possible.

On the other hand, in a mobile IPv6 technique, it is possible to perform the connection using a certain specific address (IP address), and a connection link can be seamlessly changed without interrupting the communication being continued now, even when the mobile terminal changes a connection link on the network. Standardization of this technique has been advanced in a mobile IP working group of IETF. The position registration sequence of the mobile IPv6 (see Non-Patent Document 4 described later) which is a protocol supporting the seamless handover in this IPv6 environment is performed without passing through "the intermediate node in the operator 57 which provides the access" like the foreign agent 52 prescribed in the mobile IPv4.

In the mobile IPv6, the packet to a home address can be received basically by the following operations 1 to 3, even while the mobile terminal is connected to an access link (access network).

### 1. Acquisition of Care-of Address

When a link to connect is changed to an access link, a mobile node first acquires an IP address (CoA: Care-of Address) on the link, rather than the access link. This is usually realized, when a router advertisement periodically advertised to all terminals on the access link from an access router is received, or DHCPv6 is used.

### 2. Binding Update and Binding Acknowledgement

Next, a mobile terminal reports a set of a home address of the mobile terminal and CoA with respect to its own home agent (binding update). The home agent which has received the report stores the set as a table. The mobile terminal performs the binding update every time the link to connect is changed. The home agent returns binding acknowledgment to the binding update, but this process is performed only when there is an instruction in the binding update.

### 3. IP Tunneling

Thereafter, the home agent inserts a packet addressed to a home address registered in the table among the packets which have reached a home link (home network) from a terminal which is communicating with the mobile terminal into a payload portion in an IP packet addressed to CoA registered in the table, adds an IP header addressed to the registered CoA, and transfers the packet to an IP network (IP tunneling). The transferred packet reaches an access link in accordance with CoA of the IP header, and is distributed to the mobile terminal. The mobile terminal can acquire the payload portion of the packet to thereby connect itself to the access link, while receiving the packet addressed to the home address.

However, in IPv6, in a case where the link to be connected to the mobile terminal is changed, the packet addressed to its home address reaches the previously connected link (link which has been connected before the connection change) until the binding update is completed. During this time, it is impossible to receive the packet addressed to its home address in a new connection link. Especially, in a case where a distance on the network between the mobile terminal and the home agent (distance which depends on the number of routers to relay, capacity of a relay data link, etc.) is long, a time required for the mobile terminal to perform the binding update with respect to the home agent lengthens, and there is a problem that a time for which the mobile terminal cannot receive the packet addressed to its home agent lengthens.

As one approach with respect to this problem, as described in Non-Patent Document 5 described later, in a case where a server that newly manages the position of the mobile terminal is disposed on the network constituted with a comparatively short link from the access link, and the mobile terminal changes the access link in the network, a care-of address is registered in the server, and accordingly a time required for completing the binding update is shortened. This hierarchical mobile IPv6 (HMIPv6) has been proposed by a mobile IP working group, and standardized at present. It is to be noted that this HMIFv6 is operable while coexisting with the mobile IPv6.

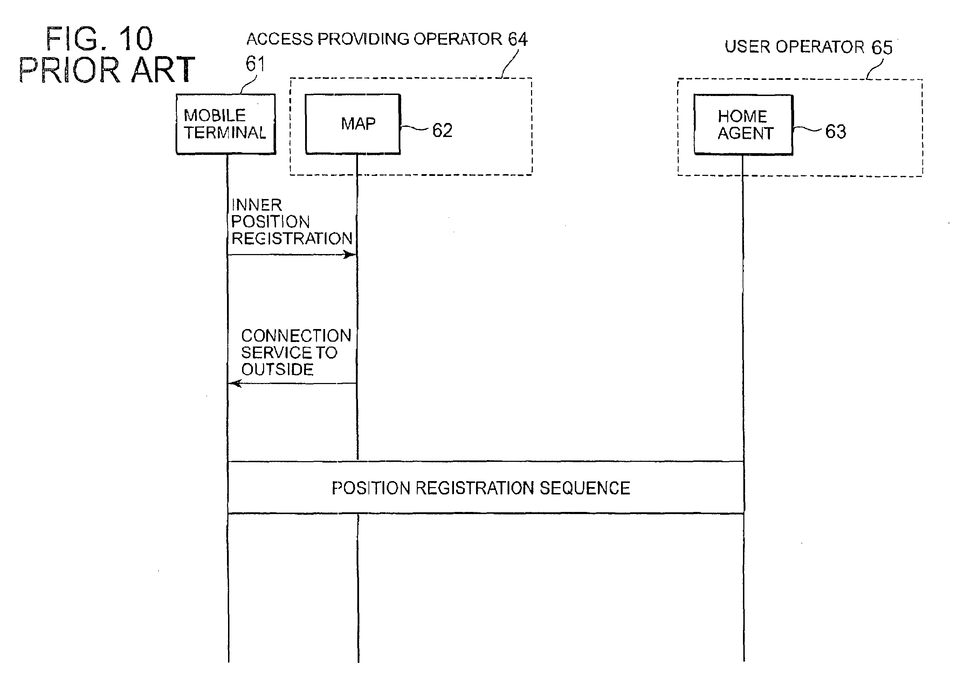

FIG. 10 is a diagram showing a sequence of HMIPv6 according to the conventional technique. In the HMIPv6, a server called a mobility anchor point (MAP) which manages movement of a mobile terminal 61 in a comparatively small link is disposed in an operator 64 which provides an access. It is to be noted that the link managed by the MAP is called an MAP domain, and an MAP 62 is usually disposed in the vicinity of an upper network in an MAP domain. In the HMIPv6, a time required for a binding process in a case where the mobile terminal 61 moves in the MAP domain can be shortened by the following operation.

In a case where the mobile terminal 61 newly enters the MAP domain or moves to a different MAP domain to change the connection link, first the terminal acquires a usual on-link CoA (LCoA) on the access link from the link, and further the mobile terminal 61 acquires an address of the MAP 62 on the access link. The mobile terminal 61 constitutes another CoA (regional CoA: RCoA) of the mobile terminal 61 from the address of the MAP 62. Moreover, the mobile terminal 61 registers a set of RCoA and LCoA of its terminal with respect to the MAP 62 (inner position registration). The MAP 62 returns binding acknowledgment in case of OK with respect to the registration, and further provides a connection server to the outside with respect to the mobile terminal 61. Moreover, the mobile terminal 61 registers RCoA with respect to a home agent (home agent of its terminal) 63 of a user's operator 65 (position registration sequence).

When this position is registered in this manner, the mobile terminal 61 may only register LCoA with respect to the MAP 62 in a case where the mobile terminal 61 changes the connection to a different link in the same MAP domain, and the registration of LCoA in the home agent 63 is unnecessary. Therefore, in a case where the mobile terminal 61 moves in the MAP domain, a series of binding process to register (binding update) CoA in the home agent 63 and to receive the acknowledgment (binding acknowledgment) is omitted, and a time for which the packet addressed to the home address cannot be received is shortened.

That is, in the HMIPv6, in a case where the mobile terminal 61 is newly connected to the link in the MAP domain, or the MAP domain is changed, the mobile terminal 61 requires registration of the set of RCoA and LCoA into the MAP 62, and the registration of RCoA into the home agent 63. However, to change the connection link in the MAP domain, the mobile terminal 61 may only register LCoA into the MAP 62, and this is effective in reducing the time required for the binding process at the time of movement in the MAP domain.

### Non-Patent Document 1

IEEE 802.1 Working Group, "Port-Based Network Access Control", IEEE 802.1x Standard, June 2001.

### Non-Patent Document 2

Pat R. Calhoun, Tony Johansson, etc., "Diameter Mobile IPv4 Application", Internet Draft, draft-ietf-aaa-diameter-mobileip-13, Oct 2002, Work In Progress.

### Non-Patent Document 3

Perkins. C, "Mobility Support for IPv4", RFC3220, Jan 2002

### Non-Patent Document 4

C. Perkins, Jari A., etc. "Mobility Support in IPv6", Internet Draft, draft-ietf-mobileio-ipv6-18, Jun 2002, Work In Progress.

### Non-Patent Document 5

H. Soliman, C. Castelluccia, etc., "Hierarchical Mobile IPv6 mobility management (HMIPv6)" Internet Draft, draft-ietf-mobileip-hmipv6-07, Oct 2002, Work in Progress.

When the mobile IPv6 and HMIPv6 are actually used, the operator providing the access is different from the user's operator in many cases, and a mobile terminal trying link connection needs to be authenticated. For this, the operator providing the service acquires authentication information from the mobile terminal before providing the connection service to a predetermined network of IP net with respect to the mobile terminal. The operator performs an authentication process using the authentication information, and need to determine whether or not to provide the connection service in accordance with an authentication result.

At present, to satisfy the conditions for performing these processes, there is a technique of performing the authentication before establishing connection at an IP level, such as IEEE802.1x. However, the packet from the IP network does not reach the mobile terminal during the authentication of the terminal, or until the binding process (exchange of the binding update and binding acknowledgment) is completed, and it is difficult to realize the seamless handover.

### Disclosure of the Invention

In view of the above-described problems, an object of the present invention is to provide a radio communication management system and a radio communication management server in which a mobile terminal smoothly performs handover at the time of handover to change link connection, and a time required for changing the link connection can be shortened.

To achieve the above-described object, the present invention relates to a radio communication management method in a radio communication system which manages link connection of a mobile terminal using HMIPv6, wherein the mobile terminal transmits information on authentication for accessing a desired network together with information for changing the link connection with respect to a server which manages the link connection of the mobile terminal to reduce a time required for changing the link connection of the mobile terminal.

Accordingly, in the HMIPv6, an authentication sequence and a position registration sequence are simultaneously executed at a handover time when the mobile terminal changes the link connection, and it is possible to reduce the time required for the change of the link connection.

Furthermore, in the present invention, in addition to the above-described invention, the mobile terminal transmits the information for changing the link connection and the information on the authentication as one piece of information, and the server which manages the link connection acquires each of the information for changing the link connection and the information on the authentication from the one piece of information.

Accordingly, when the mobile terminal transmits only one piece of information, it is possible to perform an authentication request and a position registration request.

Furthermore, in the present invention, in addition to the above-described invention, the server which manages the link connection acquires an authentication result by an authentication process using the information on the authentication.

Accordingly, the server which has received the authentication request and the position registration request can acquire the authentication result.

Additionally, in the present invention, in addition to the above-described invention, the server which manages the link connection communicates with an authentication server which authenticates the mobile terminal to acquire the authentication result.

Accordingly, the server which has received the authentication request and the position registration request can transmit an authentication commission to the authentication server, and receive the authentication result in the authentication server.

Moreover, in the present invention, in addition to the above-described invention, information notifying that the change of the link connection of the mobile terminal has been confirmed and the authentication result are transmitted as one piece of information to the mobile terminal.

Accordingly, by the transmission of one piece of information, the server which has received the authentication request and the position registration request can transmit the confirmation information of the change of the link connection and the authentication result to the mobile terminal, and determine a transmission timing of the authentication result.

Furthermore, in the present invention, in addition to the above-described invention, the server which manages the link connection transmits information notifying that the change of the link connection of the mobile terminal has been confirmed to the mobile terminal, and thereafter transmits the authentication result to the mobile terminal in a case where the authentication result can be acquired.

Accordingly, the server which has received the authentication request and the position registration request can first return the confirmation information of the change of the link connection to the mobile terminal without waiting for the acquisition of the authentication result expected to take much time.

Additionally, in the present invention, in addition to the above-described invention, the server which manages the link connection sets a time until acquiring the authentication result, and transmits the authentication result to the mobile terminal together with information notifying that the change of the link connection of the mobile terminal has been confirmed, when next receiving the information for changing the link connection from the mobile terminal in a case where the authentication result can be acquired within the time until acquiring the authentication result.

Accordingly, it is possible to determine a timing to transmit the authentication result to the mobile terminal in a case where the server which has received the authentication request and the position registration request acquires the authentication result.

Moreover, in the present invention, in addition to the above-described invention, the server which manages the link connection sets a predetermined tentative permission time for which the mobile terminal tentatively permits an access to the desired network, and transmits, to the mobile terminal, information notifying the permission of the access to the desired network only for the predetermined time together with the information notifying that the change of the link connection of the mobile terminal has been confirmed.

Accordingly, the connection permission is also given to the mobile terminal which has not finished the authentication process, and the mobile terminal can continue communication without waiting for completion of the authentication process.

Furthermore, in the present invention, in addition to the above-described invention, the server which manages the link connection sets a predetermined permission time which is longer than the predetermined tentative permission time and for which the mobile terminal permits the access to the desired network, and transmits, to the mobile terminal, the information notifying the permission of the access to the desired network only for the predetermined permission time together with the information notifying that the change of the link connection of the mobile terminal has been confirmed in a case where the authentication result indicates authentication success.

Accordingly, it is possible to grant a connection permission to which a sufficiently long valid time has been set with respect to the mobile terminal which has succeeded in the authentication.

Additionally, in the present invention, in addition to the above-described invention, the server which manages the link connection performs registration relating to the change of the link connection of the mobile terminal which has permitted the access to the desired network for the predetermined tentative permission time or only for the predetermined permission time, and deletes the registration relating to the change of the link connection of the mobile terminal in a case where the predetermined tentative permission time or the predetermined permission time has elapsed.

Accordingly, when the valid time of the connection permission granted to the mobile terminal for a time for which the authentication is performed, or the connection permission granted to the mobile terminal for a sufficiently long time expires, the mobile terminal is detached from the link, and it is accordingly possible to prevent illegal link connection from being caused.

Moreover, in the present invention, in addition to the above-described invention, the server which manages the link connection sets a time until acquiring the authentication result, and judges the authentication result as authentication failure in a case where the authentication result is not capable of being acquired within the time until acquiring the authentication result.

Accordingly, for example, in a case where the communication with the authentication server is impossible, and the authentication result relating to the mobile terminal cannot be acquired, it is possible not to grant the connection permission to the mobile terminal.

Furthermore, in the present invention, in addition to the above-described invention, the server which manages the link connection sets a predetermined connection prohibition time with respect to the mobile terminal, and does not perform a process relating to the change of the link connection of the mobile terminal which has failed in the authentication and a process relating to the authentication for the predetermined connection prohibition time after notification of authentication failure in a case where the authentication failure is notified as the authentication result with respect to the mobile terminal.

Accordingly, the connection prohibition is set to the mobile terminal which has failed in the authentication only for the predetermined time, so that a change request of the link connection or an authentication request is not accepted. Consequently, especially a repeatedly performed illegal access can be prevented.

Furthermore, in the present invention, in addition to the above-described invention, the server which manages the link connection performs registration relating to the change of the link connection of the mobile terminal which has succeeded in the authentication only in a case where authentication success is notified as the authentication result with respect to the mobile terminal.

Accordingly, the only address of the mobile terminal which has succeeded in the authentication can be registered.

Additionally, to achieve the above-described object, the present invention relates to a radio communication management method in a radio communication system which manages link connection of a mobile terminal, wherein the mobile terminal transmits information on authentication for accessing a desired network together with information for changing the link connection with respect to a server which manages the link connection of the mobile terminal, and the server which manages the link connection sets a time until acquiring an authentication result by an authentication process using the information on the authentication, and transmits the authentication result to the mobile terminal in a case where the authentication result can be acquired within the time until acquiring the authentication result.

Accordingly, it is possible to determine a timing to transmit the authentication result with respect to the mobile terminal in a case where the server which has received the authentication request acquires the authentication result.

Furthermore, in the present invention, in addition to the above-described invention, the server which manages the link connection sets a predetermined tentative permission time for which the mobile terminal tentatively permits an access to the desired network, and transmits, to the mobile terminal, information notifying the permission of the access to the desired network only for the predetermined time.

Accordingly, the connection permission is granted also to the mobile terminal which has not ended the authentication process, and the mobile terminal can continue the communication without waiting for completion of the authentication process.

Additionally, in the present invention, in addition to the above-described invention, the server which manages the link connection sets a predetermined permission time which is longer than the predetermined tentative permission time and for which the mobile terminal permits the access to the desired network, and transmits, to the mobile terminal, the information notifying the permission of the access to the desired network only for the predetermined permission time in a case where the authentication result indicates authentication success.

Accordingly, it is possible to grant the connection permission to which a sufficiently long valid time has been set with respect to the mobile terminal which has succeeded in the authentication.

Moreover, in the present invention, in addition to the above-described invention, the server which manages the link connection cuts the connection of the mobile terminal in a case where the predetermined tentative permission time or the predetermined permission time has elapsed.

Accordingly, when the valid time of the connection permission granted to the mobile terminal for a time for which the authentication is performed, or the connection permission granted to the mobile terminal for a sufficiently long time expires, the mobile terminal is detached from the link (cut from the network), and it is accordingly possible to prevent illegal link connection from being caused.

Furthermore, to achieve the above-described object, in addition to the above-described invention, the present invention relates to a radio communication management method in a radio communication system which manages link connection of a mobile terminal, wherein the mobile terminal transmits information on authentication for accessing a desired network together with information for changing the link connection with respect to a server which manages the link connection of the mobile terminal, and the server which manages the link connection sets a time until acquiring an authentication result by an authentication process using the information on the authentication, and judges the authentication result as authentication failure in a case where the authentication result is not capable of being acquired within the time until acquiring the authentication result.

Accordingly, for example, in a case where the communication with the authentication server is impossible, and the authentication result relating to the mobile terminal cannot be acquired, it is possible not to grant the connection permission to the mobile terminal.

Furthermore, in the present invention, in addition to the above-described invention, the server which manages the link connection sets a predetermined connection prohibition time with respect to the mobile terminal, and does not perform a process relating to the mobile terminal which has failed in the authentication only for the predetermined connection prohibition time after notification of the authentication failure in a case where the authentication failure is notified as the authentication result with respect to the mobile terminal.

Accordingly, the connection prohibition is set with respect to the mobile terminal which has failed in the authentication only for the predetermined time, so that the change request of the link connection or the authentication request is not received. Consequently, especially a repeatedly performed illegal access can be prevented.

Additionally, in the present invention, in addition to the above-described invention, the server which manages the link connection performs registration relating to the change of the link connection of the mobile terminal which has succeeded in the authentication only in a case where authentication success is notified as the authentication result with respect to the mobile terminal.

Accordingly, it is possible to grant the connection permission only to the address of the mobile terminal which has succeeded in the authentication.

Moreover, to achieve the above-described object, the present invention relates to a radio communication management server which manages link connection of a mobile terminal using HMIPv6, constituted to receive, from the mobile terminal, information for changing the link connection and information on authentication for accessing a desired network as one piece of information, and acquire each of the information for changing the link connection and the information on the authentication from the one piece of information.

By this constitution, when the mobile terminal only transmits one piece of information, it is possible to make an authentication request and a position registration request.

Furthermore, in addition to the above-described invention, the present invention is constituted to acquire an authentication result by an authentication process using the information on the authentication.

By this constitution, the server which has received the authentication request and the position registration request can acquire the authentication result.

Additionally, in addition to the above-described invention, the present invention comprises means for communicating with an authentication server which authenticates the mobile terminal in such a manner as to acquire the authentication result.

By this constitution, the server which has received the authentication request and the position registration request transmits an authentication commission to the authentication server, and it is possible to receive the authentication result in the authentication server.

Furthermore, in addition to the above-described invention, the present invention is constituted to transmit, to the mobile terminal, information notifying that the change of the link connection of the mobile terminal has been confirmed and the authentication result as one piece of information.

By this constitution, by the transmission of one piece of information, the server which has received the authentication request and the position registration request can transmit confirmation information of the change of the link connection and the authentication result to the mobile terminal, and it is possible to determine a transmission timing of the authentication result.

Furthermore, in addition to the above-described invention, the present invention is constituted to transmit information notifying that the change of the link connection of the mobile terminal has been confirmed to the mobile terminal, and thereafter transmit the authentication result to the mobile terminal in a case where the authentication result can be acquired.

By this constitution, the server which has received the authentication request and the position registration request can first return the confirmation information of the change of the link connection to the mobile terminal without waiting for acquisition of the authentication result expected to take much time.

Additionally, in addition to the above-described invention, the present invention further comprises: time setting means for setting a time until acquiring the authentication result in such a manner as to transmit the authentication result to the mobile terminal together with information notifying that the change of the link connection of the mobile terminal has been confirmed, when next receiving the information for changing the link connection from the mobile terminal in a case where the authentication result can be acquired within the time until acquiring the authentication result.

By this constitution, in a case where the server which has received the authentication request and the position registration request acquires the authentication result, it is possible to determine a timing to transmit the authentication result to the mobile terminal.

Furthermore, in addition to the above-described invention, the present invention further comprises: time setting means for setting a predetermined tentative permission time to tentatively permit an access to the desired network with respect to the mobile terminal in such a manner as to transmit, to the mobile terminal, information notifying the permission of the access to the desired network only for the predetermined time together with information notifying that the change of the link connection of the mobile terminal has been confirmed.

By this constitution, the connection permission is granted even to the mobile terminal which has not ended the authentication process, and the mobile terminal can continue communication without waiting for the completion of the authentication process.

Furthermore, in addition to the above-described invention, the present invention further comprises: time setting means for setting, with respect to the mobile terminal, a predetermined permission time which is longer than the predetermined tentative permission time and for which the mobile terminal permits the access to the desired network in such a manner as to transmit, to the mobile terminal, the information notifying the permission of the access to the desired network only for the predetermined time together with the information notifying that the change of the link connection of the mobile terminal has been confirmed in a case where the authentication result indicates authentication success.

By this constitution, it is possible to grant the connection permission to which a sufficiently long valid time has been set with respect to the mobile terminal which has succeeded in the authentication.

Furthermore, in addition to the above-described invention, the present invention further comprises: information registration means for performing registration relating to the change of the link connection of the mobile terminal which has permitted the access to the desired network for the predetermined tentative permission time or only for the predetermined permission time; and information deletion means for deleting the registration relating to the change of the link connection of the mobile terminal in a case where the predetermined tentative permission time or the predetermined permission time has elapsed.

By this constitution, when the valid time of the connection permission granted to the mobile terminal only for a time for which the authentication is performed, or the connection permission granted to the mobile terminal only for a sufficiently long time expires, the mobile terminal is detached from the link, and it is accordingly possible to prevent illegal link connection from being caused.

Furthermore, in addition to the above-described invention, the present invention further comprises: time setting means for setting a time until acquiring the authentication result; and judgment means for judging the authentication result as authentication failure in a case where the authentication result is not capable of being acquired within the time until acquiring the authentication result.

By this constitution, for example, in a case where the communication with the authentication server is impossible, and the authentication result relating to the mobile terminal cannot be acquired, it is possible not to grant the connection permission to the mobile terminal.

Additionally, in addition to the above-described invention, the present invention further comprises: time setting means for setting a predetermined connection prohibition time with respect to the mobile terminal; and control means for executing a control to prevent a process relating to the change of the link connection of the mobile terminal which has failed in the authentication and a process relating to the authentication from being performed for the predetermined connection prohibition time after notification of authentication failure in a case where the authentication failure is notified as the authentication result with respect to the mobile terminal.

By this constitution, the connection prohibition is set to the mobile terminal which has failed in the authentication only for the predetermined time, so that a change request of the link connection or an authentication request is not accepted. Consequently, especially a repeatedly performed illegal access can be prevented.

Furthermore, in addition to the above-described invention, the present invention further comprises: control means for executing a control to perform registration relating to the change of the link connection of the mobile terminal which has succeeded in the authentication only in a case where authentication success is notified as the authentication result with respect to the mobile terminal.

By this constitution, it is possible to register the only address of the mobile terminal which has succeeded in the authentication.

Additionally, to achieve the above-described object, the present invention relates to a radio communication management server which manages link connection of a mobile terminal, comprising: receiving means for receiving, from the mobile terminal, information on authentication for accessing a desired network together with information for changing the link connection; time setting means for setting a time until acquiring an authentication result by an authentication process using the information on the authentication; and transmitting means for transmitting the authentication result to the mobile terminal in a case where the authentication result can be acquired within the time until acquiring the authentication result.

By this constitution, in a case where the server which has received the authentication request acquires the authentication result, it is possible to determine a timing to transmit the authentication result to the mobile terminal.

Furthermore, in addition to the above-described invention, the present invention further comprises: time setting means for setting a predetermined tentative permission time for which the mobile terminal tentatively permits an access to the desired network in such a manner as to transmit, to the mobile terminal, information notifying the permission of the access to the desired network only for the predetermined time.

By this constitution, the connection permission is granted even to the mobile terminal which has not ended the authentication process, and the mobile terminal can continue communication without waiting for the completion of the authentication process.

Additionally, in addition to the above-described invention, the present invention further comprises: time setting means for setting a predetermined permission time which is longer than the predetermined tentative permission time and for which the mobile terminal permits the access to the desired network in such a manner as to transmit, to the mobile terminal, the information notifying the permission of the access to the desired network only for the predetermined time in a case where the authentication result indicates authentication success.

By this constitution, it is possible to grant the connection permission to which a sufficiently long valid time has been set with respect to the mobile terminal which has succeeded in the authentication.

Moreover, in addition to the above-described invention, the present invention further comprises: control means for cutting the connection of the mobile terminal in a case where the predetermined tentative permission time or the predetermined permission time has elapsed.

By this constitution, when the valid time of the connection permission granted to the mobile terminal only for a time for which the authentication is performed, or the connection permission granted to the mobile terminal only for a sufficiently long time expires, the mobile terminal is detached from the link (cut from the network), and it is accordingly possible to prevent illegal link connection from being caused.

Furthermore, to achieve the above-described object, the present invention relates to a radio communication management server in a radio communication system which manages link connection of a mobile terminal, comprising:
receiving means for receiving, from the mobile terminal, information on authentication for accessing a desired network together with information for changing the link connection; time setting means for setting a time until acquiring an authentication result by an authentication process using the information on the authentication by the server which manages the link connection; and transmitting means for judging the authentication result as authentication failure, and transmitting the authentication result to the mobile terminal in a case where the authentication result is not capable of being acquired within the time until acquiring the authentication result.

By this constitution, for example, in a case where the communication with the authentication server is impossible, and the authentication result relating to the mobile terminal cannot be acquired, it is possible not to grant the connection permission to the mobile terminal.

Additionally, in addition to the above-described invention, the present invention further comprises: time setting means for setting a predetermined connection prohibition time with respect to the mobile terminal; and control means for executing a control to prevent a process relating to the mobile terminal which has failed in the authentication from being performed only for the predetermined connection prohibition time after notification of authentication failure in a case where the authentication failure is notified as the authentication result with respect to the mobile terminal.

By this constitution, the connection prohibition is set to the mobile terminal which has failed in the authentication only for the predetermined time, so that a change request of the link connection or an authentication request is not accepted. Consequently, especially a repeatedly performed illegal access can be prevented.

Moreover, in addition to the above-described invention, the present invention further comprises: control means for executing a control to perform registration relating to the change of the link connection of the mobile terminal which has succeeded in the authentication only in a case where authentication success is notified as the authentication result with respect to the mobile terminal.

By this constitution, it is possible to grant the connection permission only to the mobile terminal which has succeeded in the authentication.

### Brief Description of the Drawings

FIG. 1 is a block diagram showing a constitution of MAP in a first embodiment of the present invention;
FIG. 2 is a diagram showing a sequence in the first embodiment of the present invention;
FIG. 3 is a block diagram showing a constitution of MAP in a second embodiment of the present invention;
FIG. 4 is a diagram showing a sequence in the second embodiment of the present invention;
FIG. 5 is a flowchart showing details of a process of MAP in a case where binding update is received from a mobile terminal in the second embodiment of the present invention;
FIG. 6 is a schematic diagram showing one example of a state table in the second embodiment of the present invention;
FIG. 7 is a flowchart showing details of a process of MAP in a case where an authentication result is received from an authentication server 32 and a predetermined time has elapsed in the second embodiment of the present invention;
FIG. 8 is a schematic diagram showing another example of a state table according to the present invention;
FIG. 9 is a diagram showing a sequence of diameter mobile IPv4 application according to a conventional technique; and
FIG. 10 is a diagram showing a sequence of HMIPv6 according to the conventional technique.

### Best Mode for Carrying out the Invention

Embodiments of the present invention will be described hereinafter with reference to the drawings.

### (First Embodiment)

First, a first embodiment of the present invention will be described with reference to the drawings. In the first embodiment of the present invention, a technique will be described in which an authentication sequence is included in a position registration sequence of a hierarchical mobile IP version 6 (HMIPv6), accordingly a time required for handover is shortened, and it is possible to provide seamless connection service.

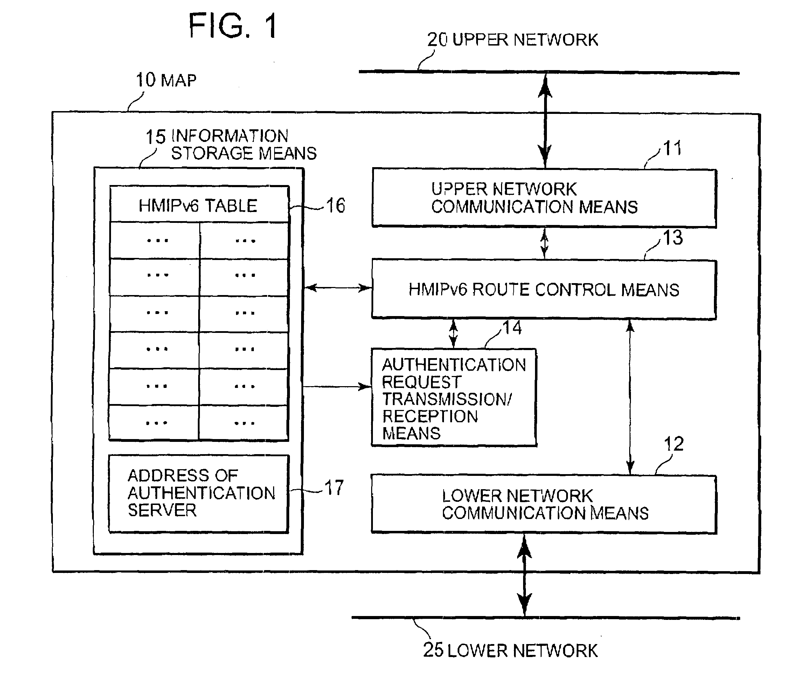

FIG. 1 is a block diagram showing a constitution of MAP in the first embodiment of the present invention. A mobility anchor point (MAP) 10 shown in FIG. 1 has: upper network communication means 11 connected to an upper network 20; lower network communication means 12 connected to a lower network 25; HMIPv6 route control means 13 for determining and controlling a route of data transmission using HMIPv6; authentication request transmission/reception means 14 for transmitting an authentication request and receiving an authentication result with respect to an authentication server 32; and information storage means 15 in which an HMIPv6 table 16 to be referred to in setting the data transmission route and an address 17 of the authentication server 32 are stored. In this constitution, constituting elements characteristic for the first embodiment of the present invention are the authentication request transmission/reception means 14, and the address 17 of the authentication server 32 stored in the information storage means 15. It is possible to utilize the upper network communication means 11, the lower network communication means 12, and the HMIPv6 route control means 13 which have heretofore existed. It is to be noted that the MAP 10 can be realized by a computer, the above-described respective means can be realized by central processing means such as CPU, and it is also possible to refer to various information, and perform a judgment•determination process.

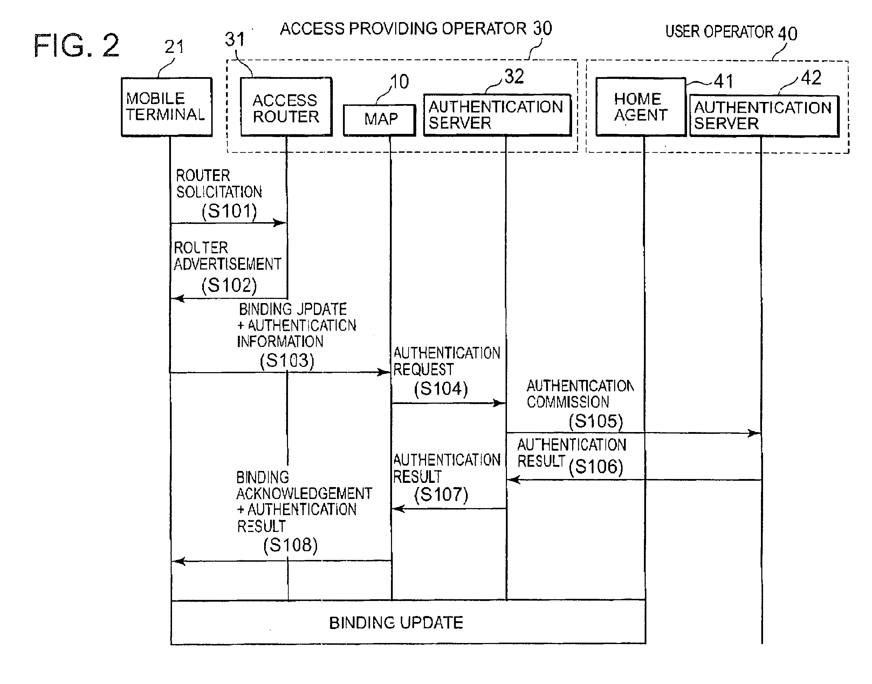

FIG. 2 is a diagram showing a sequence in the first embodiment of the present invention. In FIG. 2, a mobile terminal 21 used for a user to connect itself to a network and perform communication; an operator 30 which provides an access to a network by the mobile terminal 21; and a user's operator 40 are shown. An access router 31, an MAP 10, and an authentication server 32 exist in the operator 30 which provides an access, and a home agent 41 and an authentication server 42 exist in the user's operator 40. It is to be noted that the MAP 10 in FIG. 2 is the MAP 10 for carrying out the present invention shown in FIG. 1.

First, when the mobile terminal 21 is connected to a new link, the mobile terminal 21 transmits a router solicitation urging transmission of router advertisement with respect to the access router 31 (step S101). On receiving the router solicitation, the access router 31 transmits the router advertisement including router information such as an IP address with respect to the mobile terminal 21 (step S102). It is to be noted that the access router 31 can periodically pass router advertisement in multicast without receiving any router solicitation.

The mobile terminal 21 receives the router advertisement from the access router 31 to acquire the IP address (on-link care-of address: LCoA) on a connected link. In a case where a link connected to the mobile terminal 21 is a link in an MAP 10 domain, it is indicated in the router advertisement that the use of the MAP 10 with this link is possible, and the mobile terminal 21 on which HMIPv6 is mounted can acquire the address of the MAP 10. Moreover, a regional care-of address which is another CoA is constituted from the address of the MAP 10.

Next, the mobile terminal 21 on which the HMIPv6 is mounted transmits information (LCoA) for performing a binding update (additionally, sometimes abbreviated as BU) for the MAP 10, and authentication information including a terminal ID and user information with respect to the MAP 10 (step S103). The MAP 10 transmits an authentication request to the authentication server 32 referring to the address 17 of the authentication server 32 stored in the information storage means 15, and using the authentication request transmission/reception means 14 (step S104). Moreover, if necessary, the authentication server 32 of the operator 30 which provides the access transmits an authentication commission to the authentication server 42 of the user's operator 40 (step S105), and receives a response (authentication result) after an authentication process (step S106). Moreover, the authentication server 32 returns an authentication result to the MAP 10 (step S107).

It is to be noted that in a case where a process of the steps S106 and S107 is not required (a case where the authentication process is possible in the authentication server 32 of the operator 30 which provides the access), the authentication process is performed in the authentication server 32 of the operator 30 which provides the access, and the authentication result is returned to the MAP 10. The MAP 10 can directly exchange the authentication commission and the authentication result with the authentication server 42 of the user's operator 40.

On the other hand, the MAP 10 performs registration (binding update) of RCoA and LCoA simultaneously with the transmission of the authentication request to the authentication server 32. When the registration of RCoA and LCoA is completed, and the authentication result is received from the authentication server 32, the MAP 10 transmits binding acknowledgment (additionally, sometimes abbreviated as BA) and authentication result to the mobile terminal 21 (step S108).

When the above-described operation ends, the binding update to the home agent 41 in the HMIPv6 is thereafter similarly performed in the same manner as in the conventional art. That is, the mobile terminal 21 transmits RCoA to the home agent 41, and receives the binding acknowledgment indicating registration from the home agent 41.

As described above, according to the first embodiment of the present invention, seamless handover is an object, and the authentication sequence is included in the position registration sequence of the HMIPv6 whose standardization has been already advanced. Accordingly, it is possible to perform the authentication process simultaneously with the control relating to the movement of the IP address. As compared with a case where the position registration sequence and the authentication sequence are independently performed, time required for the handover is reduced, and it is possible to provide seamless connection service to the mobile terminal 21.

### (Second Embodiment)

Next, a second embodiment of the present invention will be described with reference to the drawings. In the second embodiment of the present invention, a technique will be described in which an authentication sequence is included in a position registration sequence of HMIPv6, and further a mobile terminal 21 can access a network even in an authentication time in consideration of time (authentication time) required in an authentication process, so that a time required for handover is shortened, and it is possible to provide seamless connection service.

This is effective especially in a case where an access network belonging to an operator 30 which provides an access is different from a home network belonging to a user's operator 40, and a time from when an MAP 10 performs an authentication commission with respect to authentication servers 32, 42 until an authentication result is returned is long. A reason why an authentication time lengthens in this manner is that the access between is distant from the home network, and additionally there is the following reason.

To connect the mobile terminal 21 to the access network, first the access network and the home network need to mutually perform roaming contraction. In this case, since the mobile terminal 21 is a roaming terminal for the access network, the authentication server 32 in the access network does not have authentication information of the mobile terminal 21. In this case, usually the authentication server 32 (authentication server 32 on the access network) belonging to the operator 30 which provides the access performs an authentication commission of the mobile terminal 21 with respect to the authentication server 42 (authentication server 42 on the home network) belonging to the user's operator 30. It is to be noted that this authentication information transfer mechanism depends on a roaming contract between the operators, protocol between the authentication servers and the like.

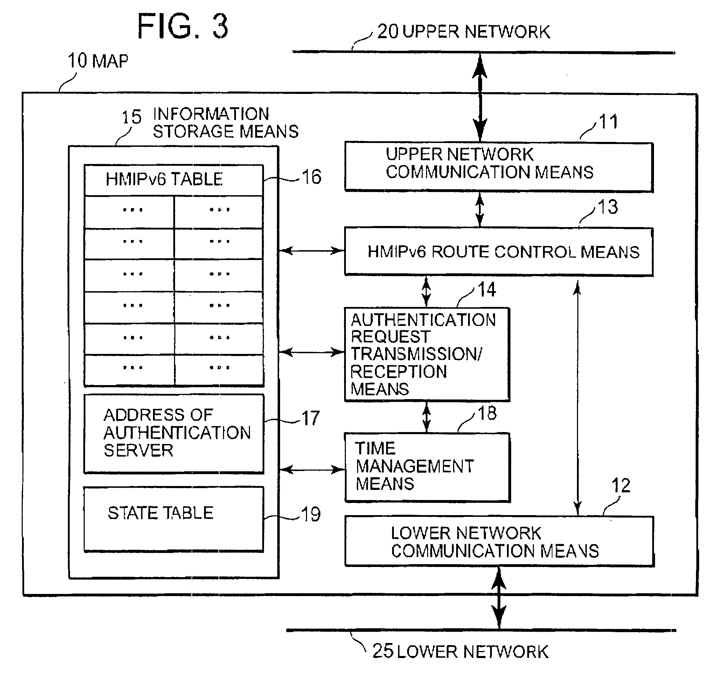

FIG. 3 is a block diagram showing a constitution of MAP in the second embodiment of the present invention. An MAP 10 shown in FIG. 3 has: upper network communication means 11 connected to an upper network 20; lower network communication means 12 connected to a lower network 25; HMIPv6 route control means 13 for determining and controlling a route of data transmission using HMIPv6; authentication request transmission/reception means 14 for transmitting an authentication request and receiving an authentication result with respect to the authentication server 32; information storage means 15 in which an HMIPv6 table (including RCoA/LCoA table) 16 to be referred to in setting the data transmission route, an address 17 of the authentication server 32, and a state table 19 are stored; and time management means 18.

In this constitution, characteristic constituting elements in addition to the first embodiment of the present invention are the time management means 18, and the state table 19 stored in the information storage means 15. It is possible to utilize the upper network communication means 11, the lower network communication means 12, the HMIPv6 route control means 13, and the authentication request transmission/reception means 14 which exist in the first embodiment of the present invention. It is to be noted that the MAP 10 can be realized by a computer, the above-described respective means can be realized by central processing means such as CPU, and it is also possible to refer to various information, and perform a judgment•determination process.

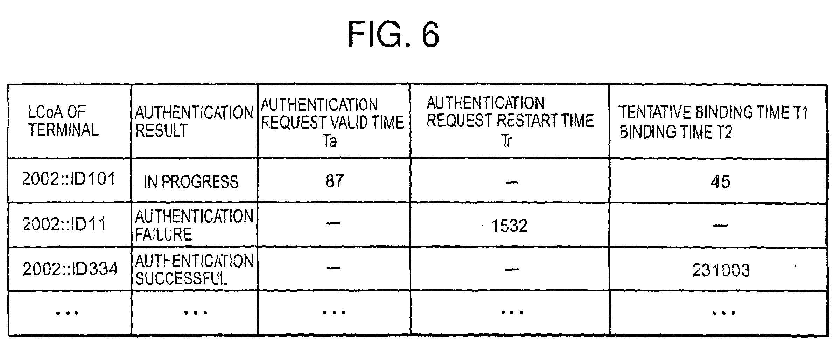

The time management means 18 has mainly a timing function of measuring time, and a remaining time judgment function of subtracting a predetermined value in accordance with a timing result (counting down from a set value in the state table 19 shown in FIG. 6 described later, which is a start value) to judge whether or not a remaining time is 0. The means also has a function of time setting means for setting various time information. It is to be noted that when it is possible to judge whether or not a predetermined time has elapsed, it is possible to use a function of judging whether or not the predetermined time has elapsed, or a function of judging whether or not a predetermined time has been reached in addition to the remaining time judgment function.

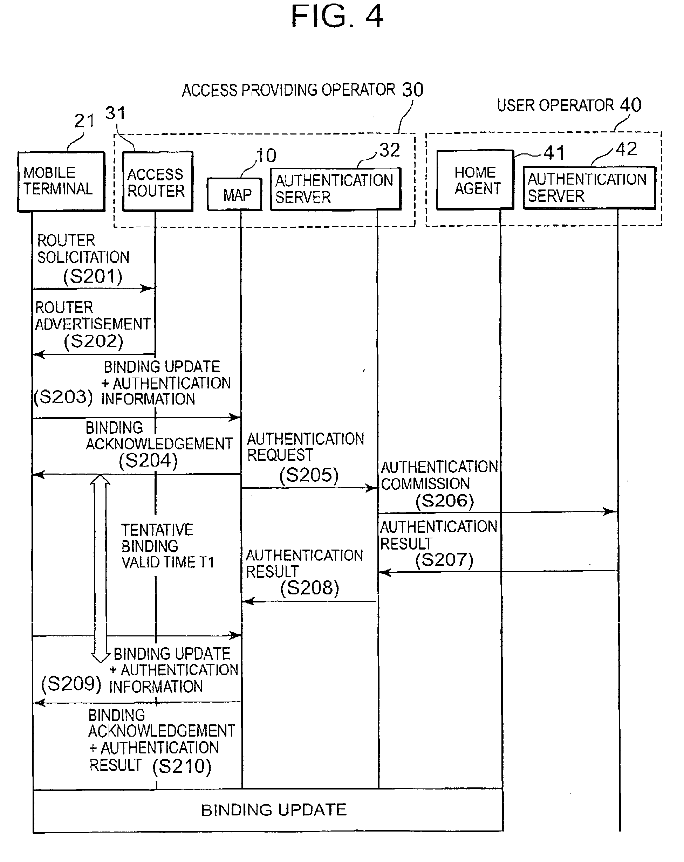

FIG. 4 is a diagram showing a sequence in the second embodiment of the present invention. In FIG. 4, in the same manner as in FIG. 2, the mobile terminal 21; the operator 30 which provides the access; and the user's operator 40 are shown. An access router 31, the MAP 10, and the authentication server 32 exist in the operator 30 which provides the access, and a home agent 41 and the authentication server 42 exist in the user's operator 40. It is to be noted that the MAP 10 in FIG. 4 is the MAP 10 for carrying out the present invention shown in FIG. 3.

When the mobile terminal 21 is connected to a new link in the same manner as in the first embodiment, the mobile terminal 21 transmits a router solicitation to the access router (step S201). On receiving this, the access router 31 transmits the router advertisement to the mobile terminal 21 (step S202). Moreover, on receiving the router advertisement from the access router, the mobile terminal 21 acquires addresses of LCoA and MAP 10 on the connected link to constitute RCoA.

Next, the mobile terminal 21 on which the HMIPv6 is mounted transmits authentication information including LCoA, terminal ID, and user information to the MAP 10 in order to perform binding update to the MAP 10 (step S203). The MAP 10 registers RCoA and LCoA concerning the binding update, and sets a sufficiently short connection valid time (tentative binding valid time T1) to return binding acknowledgment to the mobile terminal 21 (step S204). It is to be noted that the binding acknowledgment grants connection permission to a network only for the tentative binding valid time T1. That is, the mobile terminal 21 which has received the binding acknowledgment can be connected to the network only for the tentative binding valid time T1.

Furthermore, the MAP 10 transmits an authentication request to the authentication server 32 referring to the address 17 of the authentication server 32 stored in the information storage means 15, and using the authentication request transmission/reception means 14 (step S205). If necessary, the authentication server 32 of the operator 30 which provides the access transmits the authentication commission to the authentication server 42 of the user's operator 40 (step S206), and receives a response (authentication result) after the authentication process (step S207). Moreover, the authentication server 32 returns the authentication result to the MAP 10 (step S208).

It is to be noted that in a case where a process of the steps S206 and S207 is not required (a case where the authentication process is possible in the authentication server 32 of the operator 30 which provides the access) in the same manner as in the first embodiment, the authentication process is performed in the authentication server 32 of the operator 30 which provides the access, and the authentication result is returned to the MAP 10. The MAP 10 can directly exchange the authentication commission and the authentication result with the authentication server 42 of the user's operator 40.

On the other hand, as to the MAP 10, even after the connection to the network is permitted only for the tentative binding valid time T1, information (LCoA) for performing binding update to the MAP 10, and authentication information including terminal ID and user information are transmitted to the MAP 10 (step S209).

In a case where the reception of the authentication result from the authentication server 32 in the step S208 is completed at a time when the binding update is received in this step S209, the MAP 10 transmits the binding acknowledgment and the authentication result to the mobile terminal 21 (step S210). At this time, in a case where the authentication result indicates success, the MAP 10 transmits connection permission, and binding valid time T2 which is sufficiently long as compared with the tentative binding valid time T1 to the mobile terminal 21. The mobile terminal 21 which has received the binding acknowledgment can be connected to the network only for the binding valid time T2. Thereafter, the binding update to the home agent 41 is performed in the HMIPv6 in the same manner as in the conventional art, and the mobile terminal 21 transmits RCoA to the home agent 41, and receives binding acknowledgment indicating registration completion from the home agent 41.

On the other hand, although not shown in FIG. 4, in a case where the reception of the authentication result from the authentication server 32 in the step S208 is not completed at a time when the binding update is received in this step S209 (a case where the binding update is received again from the mobile terminal 21 before receiving the authentication result), the MAP 10 returns to the step S204 again, and transmits binding acknowledgment to grant the connection permission to the network with respect to the mobile terminal 21 only for the tentative binding valid time T1. It is to be noted that a process of transmitting the binding acknowledgment to grant the connection permission to the network to the mobile terminal 21 only for the tentative binding valid time T1 is repeated until the authentication result is received from the authentication server 32.

Furthermore, although not shown in FIG. 4, in a case where the authentication result cannot be received from the authentication server 32 even after the elapse of a predetermined authentication request valid time Ta (i.e., a case where the process of the step S208 has not been performed), the MAP 10 judges that the authentication of the mobile terminal 21 has failed. The MAP transmits an authentication result indicating the authentication failure to the mobile terminal 21, sets a connection prohibition period (connection prohibition time) for a predetermined authentication request restart time Tr, and returns binding acknowledgment indicating the connection prohibition period with respect to the binding update from the mobile terminal 21.

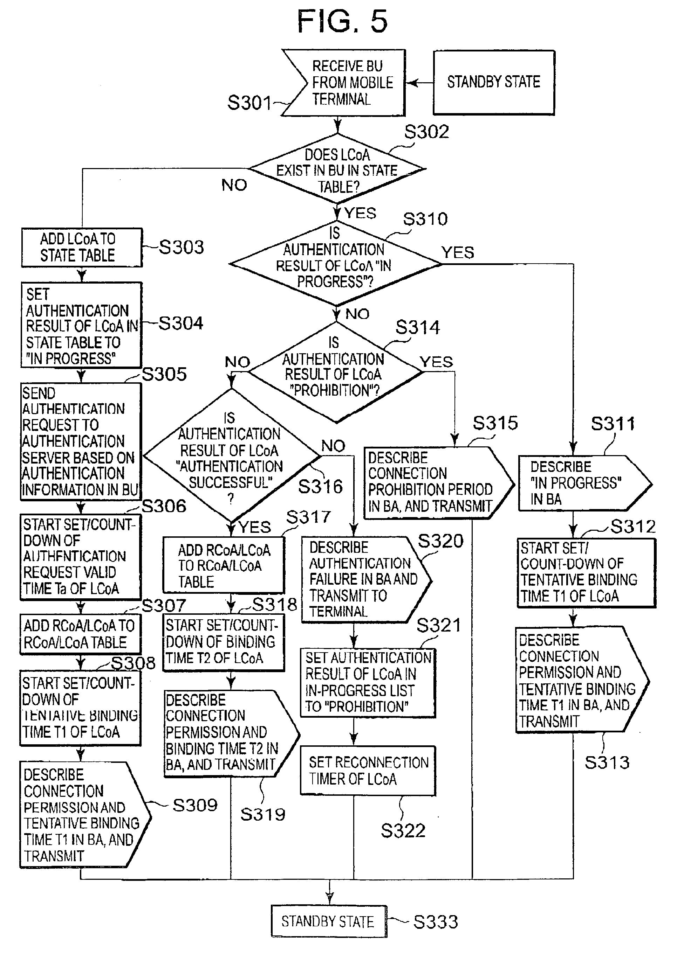

Moreover, details of the process of the MAP 10 will be described in a case where the binding update is received from the mobile terminal 21 in the above-described sequence. FIG. 5 is a flowchart showing details of the process of MAP in a case where the binding update is received from the mobile terminal in the second embodiment of the present invention. The MAP 10 receives the binding update from the mobile terminal 21 (step S301), and checks whether or not LCoA of the mobile terminal 21 which is a transmitter of the binding update exists in the state table 19 (step S302).

Moreover, FIG. 6 is a schematic diagram showing one example of a state table in the second embodiment of the present invention. As shown in FIG. 6, in the state table 19, LCoA of the mobile terminal 21, authentication results, set values of the authentication request valid time Ta, set values of the authentication request restart time Tr, and a combination of the set value of the tentative binding valid time T1 with that of the binding time T2 are recorded. It is to be noted that the authentication results include a state or authentication result in the authentication process of the mobile terminal 21. Examples include "in progress" indicating that the authentication is in progress, "authentication success" indicating that the authentication is successful, "authentication failure" indicating that the authentication fails, "prohibition" indicating that the connection is prohibited and the like. The tentative binding time T1 and the authentication request valid time Ta are given in a state in which the authentication is in progress, the binding time T2 is given in a state of authentication success, and the authentication request restart time Tr is given in a state of authentication failure.

In a case where LCoA of the mobile terminal 21 does not exist in the state table 19, LCoA of the mobile terminal 21 is added to the state table 19 (step S303), and the authentication result of the LCoA in the state table 19 is set to "in progress" (step S304). Moreover, the authentication request requesting the authentication process of the mobile terminal 21 to be performed is transmitted to the authentication server 32 based on authentication information (terminal ID of the mobile terminal 21 and user information) in the BU (step S305). Simultaneously, the authentication request valid time Ta of the LCoA is set, and countdown (subtraction process) is started (step S306).

It is to be noted that as the authentication request valid time Ta, a time slightly longer than time required for exchange with the authentication server 32 and the authentication process in the authentication server 32 is preferably set. The authentication request valid time Ta may be set for each mobile terminal 21 (each LCoA) in consideration of various conditions relating to the mobile terminal 21 or the authentication server 32, and a predetermined value may be uniformly set.

Moreover, a set of RCoA/LCoA of the mobile terminal 21 is added (registered) in the RCoA/LCoA table (step S307), the tentative binding time T1 of the LCoA is set, and countdown (subtraction process) is started (step S308). It is to be noted that as the tentative binding time T1, a time which is short to such an extent that an illegal network access is impossible within the time is preferably set. The tentative binding time T1 may be set for each mobile terminal 21 (each LCoA) in consideration of various conditions relating to the mobile terminal 21 or the authentication server 32, and a predetermined value may be uniformly set. The binding acknowledgment in which connection permission set in this manner, and the tentative binding valid time T1 that is a valid time for permitting the connection are described is transmitted to the mobile terminal 21 (step S309). There is a standby state until a response from the mobile terminal 21 or the authentication server 32 is received, or the authentication request valid time Ta or the tentative binding time T1 is counted down to 0.

On the other hand, in a case where LCoA of the mobile terminal 21 exists in the state table 19, it is checked whether or not the authentication result of the LCoA is "in progress" (step S310). When the authentication result of the LCoA is "in progress", "in progress" is described in the binding acknowledgment (step S311). The tentative binding time T1 of the LCoA is set, countdown (subtraction process) is newly started (step S312), and the binding acknowledgment in which newly set connection permission, and the tentative binding time T1 that is a valid time for permitting the connection are described is transmitted to the mobile terminal 21 (step S313). Moreover, there is a standby state until a response from the mobile terminal 21 or the authentication server 32 is received, or the authentication request valid time Ta or the tentative binding time T1 is counted down to 0.

Moreover, when the authentication result of the LCoA is not "in progress", it is checked whether or not the authentication result of the LCoA is "prohibition" (step S314)/ When the authentication result of the LCoA is "prohibition", a connection prohibition period is described in the binding acknowledgment, and the acknowledgment is transmitted to the mobile terminal 21 (step S315).

Furthermore, in a case where the authentication result of the LCoA is not "prohibition", it is checked whether or not the authentication result of the LCoA is "authentication success" (step S316). When the authentication result of the LCoA is "authentication success", a set of RCoA/LCoA of the mobile terminal 21 is added (registered) in the RCoA/LCoA table (step S317), the binding time T2 of the LCoA is set, and countdown (subtraction process) is started (step S318). It is to be noted that as the binding time T2, a time which is long to such an extent that a sufficient connection service can be provided to the mobile terminal 21 is preferably set. The binding time T2 may be set for each mobile terminal 21 (each LCoA) in consideration of various conditions relating to the mobile terminal 21 or the authentication server 32, and a predetermined value may be uniformly set. The MAP 10 transmits, to the mobile terminal 21, a binding acknowledgment in which connection permission set in this manner, and the binding time T2 that is a valid time for permitting the connection are described (step S319). The connection service for the binding time T2 is supplied to the mobile terminal 21.

Moreover, when the authentication result of the LCoA is not "authentication success", the authentication result of the LCoA is regarded as "authentication failure", the authentication failure is described in the binding acknowledgment, and the acknowledgment is transmitted to the mobile terminal 21 (step S320). The authentication result of the LCoA of the mobile terminal 21 in the state table 19 is set to "prohibition" in order to prevent the authentication process of the mobile terminal 21 from being performed only for a predetermined period of time (authentication request restart time Tr) (step S321). Moreover, the authentication request restart time Tr of the LCoA is set, and countdown (subtraction process) is started (step S322).

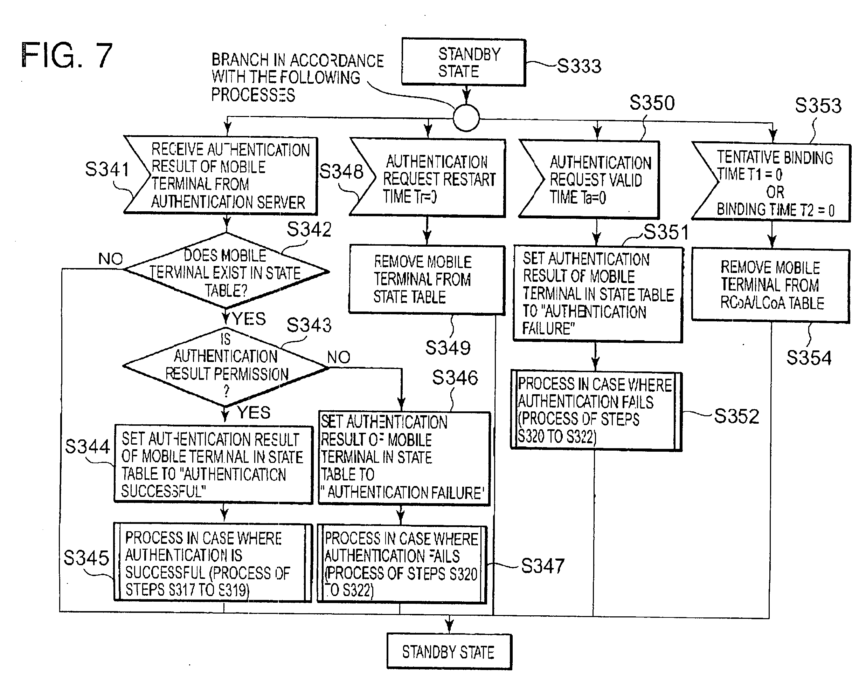

In the flowchart shown in FIG. 5, the MAP 10 ends a predetermined process, and is brought into a standby state. In this standby state, the MAP 10 is brought into various states such as a state to wait for the reception of the response from the mobile terminal 21 or the authentication server 32, a standby state until the tentative binding time T1, binding time T2, authentication request valid time Ta, and the authentication request restart time Tr are counted down to 0 and the like. In a case where BU is received from the mobile terminal 21 again in the standby state, the process shown in the flowchart shown in FIG. 5 is repeated. On the other hand, in a case where the authentication result is received from the authentication server 32, or the tentative binding time T1, binding time T2, authentication request valid time Ta, or the authentication request restart time Tr is counted down to 0, the process of the flowchart shown in FIG. 7 is performed.

FIG. 7 is a flowchart showing details of a process of MAP in a case where an authentication result is received from an authentication server and a predetermined time has elapsed in the second embodiment of the present invention. It is to be noted that the flowchart shown in FIG. 7 continues from the flowchart shown in FIG. 5, and the standby state (step S333) shown in FIG. 5 is the same step as that of the standby state (step S333) shown in FIG. 7.

First, when the MAP 10 receives the authentication result of the mobile terminal 21 from the authentication server 32 (step S341), it is checked whether or not the mobile terminal 21 that is an object of the authentication process exists in the state table 19 (entry relating to the mobile terminal 21 exists) (step S342). In a case where the mobile terminal 21 does not exist, the authentication process relating to the mobile terminal 21 does not have to be performed, and returns to the standby state again. On the other hand, when the mobile terminal 21 exists, it is judged whether or not the authentication result indicates permission (step S343).

When the authentication result indicates the permission, the MAP 10 sets the authentication result of the mobile terminal 21 in the state table 19 to "authentication success" (step S344), and the process (the same as that of steps S317 to S319) in the authentication success is performed (step S345). On the other hand, when the authentication result indicates non-permission, the MAP 10 sets the authentication result of the mobile terminal 21 in the state table 19 to "authentication failure" (step S346), the process (the same process as that of steps S320 to S322) in the authentication failure is performed (step S347), and the standby state returns again.

Moreover, when the authentication request restart time Tr turns to 0 (step S348), setting of a connection prohibition division with respect to the mobile terminal 21 ends, and an entry relating to the mobile terminal 21 is deleted from the state table 19 (step S349). Moreover, the authentication request valid time Ta turns to 0 (step S350), the authentication result cannot be acquired from the authentication server 32. The authentication result of the mobile terminal 21 in the state table 19 is set to "authentication failure" (step S351), the process (the same process as that of steps S320 to S322) in the authentication failure is performed (step S352), and the standby state returns again.

Moreover, when the tentative binding time T1 or the binding time T2 turns to 0 (step S353), a valid period of the connection service supplied to the mobile terminal 21 expires, and is regarded as invalid, information on the mobile terminal 21 is deleted from the RCoA/LCoA table (step S354), and the standby state returns again.

As described above, according to the second embodiment of the present invention, seamless handover is an object, and the authentication sequence is included in the position registration sequence of the HMIPv6 whose standardization has been already advanced. Furthermore, considering a case where much time is required in the authentication sequence, the mobile terminal 21 is set in such a manner as to be accessible to the network even in the authentication time. Accordingly, it is possible to perform the authentication process simultaneously with the control relating to the movement of the IP address. As compared with a case where the position registration sequence and the authentication sequence are independently performed, or a technique to simultaneously perform the position registration sequence and the authentication sequence described in the first embodiment of the present invention, a time required for the handover is reduced, and it is possible to provide seamless connection service to the mobile terminal 21.

Moreover, in the above-described second embodiment, especially a radio communication system utilizing HMIPv6 has been described as an example, and the followings 1 to 4 are not limited to HMIPv6, and are applicable even to a radio communication system utilizing another communication protocol, such as global IPv4, and diameter mobile IPv4 described in the conventional technique.
1. to grant tentative connection permission only for a short time (corresponding to the above-described tentative binding time T1)
2. to dispose time limit to the connection permission (corresponding to the above-described binding time T2)
3. to set a time until a response is received in a case where authentication request is performed with respect to the authentication server (corresponding to the above-described authentication request valid time Ta)
4. to prohibit connection only for a certain time with respect to the mobile terminal which has failed in authentication (corresponding to the above-described authentication request restart time Tr)

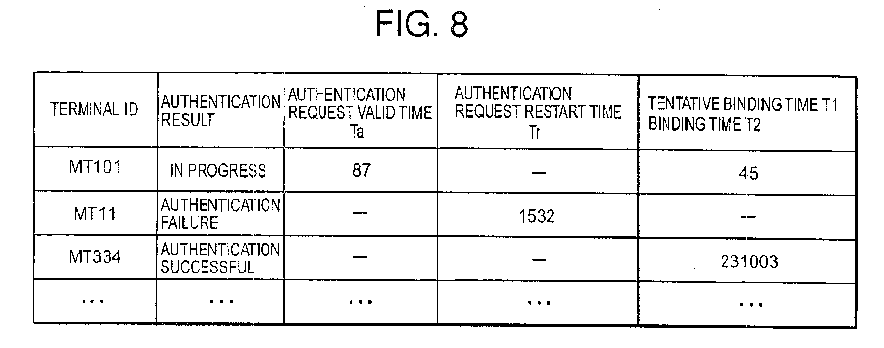

In this case, in the above-described second embodiment, the MAP 10 is reread as a management server, the binding update as an authentication request, the binding acknowledgment as a response to the authentication request, the binding time as a connection permission time, the LCoA as terminal identification information, and the RCoA/LCoA table as the connection permission table, respectively. By the use a state table shown in FIG. 8 as a state table, it is possible to generalize a communication protocol other than HMIPv6. In the above-described second embodiment, the management server instantly supplies the connection service to the mobile terminal 21 which has succeeded in the authentication. However, in a case where there is an authentication request from the mobile terminal 21, and the authentication is successful, the "authentication success" is first described. Next, in a case where the authentication request is received from the mobile terminal, the description of the "authentication success" of the state table is confirmed, and the connection service at a usual time may be first provided.

### Industrial Applicability

As described above, the present invention relates to a radio communication management method in a radio communication system which manages link connection of a mobile terminal using HMIPv6. The mobile terminal transmits information on authentication for accessing a desired network together with information for changing the link connection with respect to a server which manages the link connection of the mobile terminal, so that a position registration sequence and an authentication sequence are simultaneously performed. Therefore, at a handover time when the mobile terminal changes the link connection, the handover is smoothly performed, and a time required for changing the link connection can be shortened.

## Claims

1. A radio communication management method in a radio communication system which manages link connection of a mobile terminal using HMIPv6,
wherein the mobile terminal transmits information on authentication for accessing a desired network together with information for changing the link connection with respect to a server which manages the link connection of the mobile terminal to reduce a time required for changing the link connection of the mobile terminal.

2. The radio communication management method according to claim 1, wherein the mobile terminal transmits the information for changing the link connection and the information on the authentication as one piece of information, and the server which manages the link connection acquires each of the information for changing the link connection and the information on the authentication from the one piece of information.

3. The radio communication management method according to claim 1, wherein the server which manages the link connection acquires an authentication result by an authentication process using the information on the authentication.

4. The radio communication management method according to claim 3, wherein the server which manages the link connection communicates with an authentication server which authenticates the mobile terminal to acquire the authentication result.

5. The radio communication management method according to claim 3, comprising the steps of: transmitting information notifying that the change of the link connection of the mobile terminal has been confirmed and the authentication result as one piece of information to the mobile terminal.

6. The radio communication management method according to claim 3, wherein the server which manages the link connection transmits information notifying that the change of the link connection of the mobile terminal has been confirmed to the mobile terminal, and thereafter transmits the authentication result to the mobile terminal in a case where the authentication result is capable of being acquired.

7. The radio communication management method according to claim 6, wherein the server which manages the link connection sets a time until acquiring the authentication result, and transmits the authentication result to the mobile terminal together with information notifying that the change of the link connection of the mobile terminal has been confirmed, when next receiving the information for changing the link connection from the mobile terminal in a case where the authentication result is capable of being acquired within the time until acquiring the authentication result.

8. The radio communication management method according to claim 7, wherein the server which manages the link connection sets a predetermined tentative permission time for which the mobile terminal tentatively permits an access to the desired network, and transmits, to the mobile terminal, information notifying the permission of the access to the desired network only for the predetermined time together with the information notifying that the change of the link connection of the mobile terminal has been confirmed.

9. The radio communication management method according to claim 8, wherein the server which manages the link connection sets a predetermined permission time which is longer than the predetermined tentative permission time and for which the mobile terminal permits the access to the desired network, and transmits, to the mobile terminal, the information notifying the permission of the access to the desired network only for the predetermined permission time together with the information notifying that the change of the link connection of the mobile terminal has been confirmed in a case where the authentication result indicates authentication success.

10. The radio communication management method according to claim 8, wherein the server which manages the link connection performs registration relating to the change of the link connection of the mobile terminal which has permitted the access to the desired network for the predetermined tentative permission time or only for the predetermined permission time, and deletes the registration relating to the change of the link connection of the mobile terminal in a case where the predetermined tentative permission time or the predetermined permission time has elapsed.

11. The radio communication management method according to claim 3, wherein the server which manages the link connection sets a time until acquiring the authentication result, and judges the authentication result as authentication failure in a case where the authentication result is not capable of being acquired within the time until acquiring the authentication result.

12. The radio communication management method according to claim 5 or 6, wherein the server which manages the link connection sets a predetermined connection prohibition time with respect to the mobile terminal, and does not perform a process relating to the change of the link connection of the mobile terminal which has failed in the authentication and a process relating to the authentication for the predetermined connection prohibition time after notification of authentication failure in a case where the authentication failure is notified as the authentication result with respect to the mobile terminal.

13. The radio communication management method according to claim 5 or 6, wherein the server which manages the link connection performs registration relating to the change of the link connection of the mobile terminal which has succeeded in the authentication only in a case where authentication success is notified as the authentication result with respect to the mobile terminal.

14. A radio communication management method in a radio communication system which manages link connection of a mobile terminal,
wherein the mobile terminal transmits information on authentication for accessing a desired network together with information for changing the link connection with respect to a server which manages the link connection of the mobile terminal, and
the server which manages the link connection sets a time until acquiring an authentication result by an authentication process using the information on the authentication, and transmits the authentication result to the mobile terminal in a case where the authentication result is capable of being acquired within the time until acquiring the authentication result.

15. The radio communication management method according to claim 14, wherein the server which manages the link connection sets a predetermined tentative permission time for which the mobile terminal tentatively permits an access to the desired network, and transmits, to the mobile terminal, information notifying the permission of the access to the desired network only for the predetermined time.

16. The radio communication management method according to claim 15, wherein the server which manages the link connection sets a predetermined permission time which is longer than the predetermined tentative permission time and for which the mobile terminal permits the access to the desired network, and transmits, to the mobile terminal, the information notifying the permission of the access to the desired network only for the predetermined permission time in a case where the authentication result indicates authentication success.

17. The radio communication management method according to claim 15 or 16, wherein the server which manages the link connection cuts the connection of the mobile terminal in a case where the predetermined tentative permission time or the predetermined permission time has elapsed.

18. A radio communication management method in a radio communication system which manages link connection of a mobile terminal,
wherein the mobile terminal transmits information on authentication for accessing a desired network together with information for changing the link connection with respect to a server which manages the link connection of the mobile terminal, and
the server which manages the link connection sets a time until acquiring an authentication result by an authentication process using the information on the authentication, and judges the authentication result as authentication failure in a case where the authentication result is not capable of being acquired within the time until acquiring the authentication result.

19. The radio communication management method according to claim 14 or 18, wherein the server which manages the link connection sets a predetermined connection prohibition time with respect to the mobile terminal, and does not perform a process relating to the mobile terminal which has failed in the authentication only for the predetermined connection prohibition time after notification of the authentication failure in a case where the authentication failure is notified as the authentication result with respect to the mobile terminal.

20. The radio communication management method according to claim 14, wherein the server which manages the link connection performs registration relating to the change of the link connection of the mobile terminal which has succeeded in the authentication only in a case where authentication success is notified as the authentication result with respect to the mobile terminal.

21. A radio communication management server which manages link connection of a mobile terminal using HMIPv6, constituted to receive, from the mobile terminal, information for changing the link connection and information on authentication for accessing a desired network as one piece of information, and acquire each of the information for changing the link connection and the information on the authentication from the one piece of information.

22. The radio communication management server according to claim 21, constituted to acquire an authentication result by an authentication process using the information on the authentication.

23. The radio communication management server according to claim 22, comprising:
means for communicating with an authentication server which authenticates the mobile terminal in such a manner as to acquire the authentication result.

24. The radio communication management server according to claim 22, constituted to transmit, to the mobile terminal, information notifying that the change of the link connection of the mobile terminal has been confirmed and the authentication result as one piece of information.

25. The radio communication management server according to claim 22, constituted to transmit information notifying that the change of the link connection of the mobile terminal has been confirmed to the mobile terminal, and thereafter transmit the authentication result to the mobile terminal in a case where the authentication result is capable of being acquired.

26. The radio communication management server according to claim 25, further comprising: time setting means for setting a time until acquiring the authentication result in such a manner as to transmit the authentication result to the mobile terminal together with information notifying that the change of the link connection of the mobile terminal has been confirmed, when next receiving the information for changing the link connection from the mobile terminal in a case where the authentication result is capable of being acquired within the time until acquiring the authentication result.

27. The radio communication management server according to claim 26, further comprising:
time setting means for setting a predetermined tentative permission time to tentatively permit an access to the desired network with respect to the mobile terminal in such a manner as to transmit, to the mobile terminal, information notifying the permission of the access to the desired network only for the predetermined time together with information notifying that the change of the link connection of the mobile terminal has been confirmed.

28. The radio communication management server according to claim 27, further comprising:
time setting means for setting, with respect to the mobile terminal, a predetermined permission time which is longer than the predetermined tentative permission time and for which the mobile terminal permits the access to the desired network in such a manner as to transmit, to the mobile terminal, the information notifying the permission of the access to the desired network only for the predetermined time together with the information notifying that the change of the link connection of the mobile terminal has been confirmed in a case where the authentication result indicates authentication success.

29. The radio communication management server according to claim 27, further comprising:
information registration means for performing registration relating to the change of the link connection of the mobile terminal which has permitted the access to the desired network for the predetermined tentative permission time or only for the predetermined permission time; and
information deletion means for deleting the registration relating to the change of the link connection of the mobile terminal in a case where the predetermined tentative permission time or the predetermined permission time has elapsed.

30. The radio communication management server according to claim 22, further comprising:
time setting means for setting a time until acquiring the authentication result; and
judgment means for judging the authentication result as authentication failure in a case where the authentication result is not capable of being acquired within the time until acquiring the authentication result.

31. The radio communication management server according to claim 24 or 25, further comprising:
time setting means for setting a predetermined connection prohibition time with respect to the mobile terminal; and
control means for executing a control to prevent a process relating to the change of the link connection of the mobile terminal which has failed in the authentication and a process relating to the authentication from being performed for the predetermined connection prohibition time after notification of authentication failure in a case where the authentication failure is notified as the authentication result with respect to the mobile terminal.

32. The radio communication management server according to claim 24 or 25, further comprising:
control means for executing a control to perform registration relating to the change of the link connection of the mobile terminal which has succeeded in the authentication only in a case where authentication success is notified as the authentication result with respect to the mobile terminal.

33. A radio communication management server which manages link connection of a mobile terminal, comprising:
receiving means for receiving, from the mobile terminal, information on authentication for accessing a desired network together with information for changing the link connection;
time setting means for setting a time until acquiring an authentication result by an authentication process using the information on the authentication; and
transmitting means for transmitting the authentication result to the mobile terminal in a case where the authentication result is capable of being acquired within the time until acquiring the authentication result.

34. The radio communication management server according to claim 33, further comprising:
time setting means for setting a predetermined tentative permission time for which the mobile terminal tentatively permits an access to the desired network in such a manner as to transmit, to the mobile terminal, information notifying the permission of the access to the desired network only for the predetermined time.

35. The radio communication management server according to claim 34, further comprising:
time setting means for setting a predetermined permission time which is longer than the predetermined tentative permission time and for which the mobile terminal permits the access to the desired network in such a manner as to transmit, to the mobile terminal, the information notifying the permission of the access to the desired network only for the predetermined time in a case where the authentication result indicates authentication success.

36. The radio communication management server according to claim 34 or 35, further comprising: control means for cutting the connection of the mobile terminal in a case where the predetermined tentative permission time or the predetermined permission time has elapsed.

37. A radio communication management server in a radio communication system which manages link connection of a mobile terminal, comprising:
receiving means for receiving, from the mobile terminal, information on authentication for accessing a desired network together with information for changing the link connection;
time setting means for setting a time until acquiring an authentication result by an authentication process using the information on the authentication by the server which manages the link connection; and
transmitting means for judging the authentication result as authentication failure, and transmitting the authentication result to the mobile terminal in a case where the authentication result is not capable of being acquired within the time until acquiring the authentication result.

38. The radio communication management server according to claim 33 or 37, further comprising:
time setting means for setting a predetermined connection prohibition time with respect to the mobile terminal; and
control means for executing a control to prevent a process relating to the mobile terminal which has failed in the authentication from being performed only for the predetermined connection prohibition time after notification of authentication failure in a case where the authentication failure is notified as the authentication result with respect to the mobile terminal.

39. The radio communication management server according to claim 33, further comprising:
control means for executing a control to perform registration relating to the change of the link connection of the mobile terminal which has succeeded in the authentication only in a case where authentication success is notified as the authentication result with respect to the mobile terminal.
